# EUROPEAN PATENT SPECIFICATION

(11) **EP 2 410 753 B1**
(45) Date of publication and mention of the grant of the patent: **19.10.2016**
(21) Application number: 10792326.0
(22) Date of filing: 23.06.2010
(51) Int. Cl.: H04N 13/00, H04N 13/04

(54) **IMAGE-PROCESSING METHOD FOR A DISPLAY DEVICE WHICH OUTPUTS THREE-DIMENSIONAL CONTENT, AND DISPLAY DEVICE ADOPTING THE METHOD**
BILDVERARBEITUNGSVERFAHREN FÜR EINE ANZEIGEVORRICHTUNG MIT AUSGABE DREIDIMENSIONALER INHALTE UND ANZEIGEVORRICHTUNG ZUR ANWENDUNG DES VERFAHRENS
PROCÉDÉ DE TRAITEMENT D'IMAGE POUR DISPOSITIF D'AFFICHAGE PRÉSENTANT UN CONTENU 3D, ET DISPOSITIF D'AFFICHAGE METTANT EN OEUVRE LE PROCÉDÉ

(30) Priority: 23.06.2009 US 219733 P; 22.06.2010 KR 20100059216
(43) Date of publication of application: 25.01.2012
(73) Proprietor: LG Electronics Inc., Seoul 150-721 (KR)
(72) Inventor: CHI, Sanghoon, Pyeongtaek-si Gyeonggi-do 451-731 (KR); LEE, Giyoung, Pyeongtaek-si Gyeonggi-do 451-731 (KR); HWANGBO, Sang Kyu, Pyeongtaek-si Gyeonggi-do 451-731 (KR)
(74) Representative: Cabinet Plasseraud
(86) International application number: PCT/KR2010/004073
(87) International publication number: WO 2010/151044

(56) References cited:
- EP-A1- 1 619 903
- EP-A1- 1 662 809
- US-A1- 2004 135 780
- US-A1- 2004 233 222
- US-A1- 2005 146 521
- US-A1- 2007 229 547
- US-A1- 2008 150 945
- US-A1- 2009 142 041
- US-B1- 6 798 406

## Description

### Field of the Invention

The present invention relates to an image-processing method for a display device which outputs three-dimensional content, and a display device adopting the method and, more particularly, to an image-processing method for a display device, which performs image-processing on left image data and right image data of three-dimensional (3D) image data and outputting a 3D format of the processed 3D image data, in a display device for outputting 3D contents, and a display device adopting the method.

### Background Art

The current broadcasting environment is rapidly shifting from analog broadcasting to digital broadcasting. With such transition, contents for digital broadcasting are increasing in number as opposed to contents for the conventional analog broadcasting, and the types of digital broadcasting contents are also becoming more diverse. Most particularly, the broadcasting industry has become more interested in 3-dimensional (3D) contents, which provide a better sense of reality and 3D effect as compared to 2-dimensional (2D) contents. And, therefore, a larger number of 3D contents are being produced.

However, the related art display device is disadvantageous, in that a method for processing images of three-dimensional (3D) content is yet to be developed, or in that, by directly adopting the image-processing method used for processing two-dimensional (2D) contents on 3D contents, the user may not be able to be provided with a normal view of the 3D contents.

Therefore, in order to resolve such disadvantages of the related art, an image-processing method for a display device and a display device adopting the method enabling 3D image data to be image-processed so as to provide high picture quality image data, and enabling the users to conveniently view and use the 3D image data, are required to be developed.

US 2004/135780 A1 discloses displaying a 2D image and drawing a grey level image thereon to define a depth map, whereby a stereo image pair can be generated from the depth map for displaying an anaglyph image of the stereo image pair. US 2005/146521 A1 discloses a method for providing a 3D image that includes selecting a screen size and scaling depth information associated with objects to preserve perceived depths of the objects when the 3D image is presented at the screen size. Other stereoscopic-vision image display methods are disclosed in EP 1 619 903 A1 and EP 1 662 809 A1.

### Detailed Description of the Invention

### Technical Objects

In order to resolve the disadvantages of the related art, an object of the present invention is to provide an image-processing method for a display device and a display device adopting the method enabling 3D image data to be image-processed so as to provide high picture quality image data, and enabling the users to conveniently view and use the 3D image data.

### Technical Solutions

In an aspect of the present invention, an image-processing method for a three-dimensional (3D) display device is provided in accordance with claim 1. Embodiments of the method are further defined in claims 2-4.

In yet another aspect of the present invention, a three-dimensional (3D) display device is provided in accordance with claim 5. Embodiments of the display device are further defined in claims 6-8.

### Effects of the Invention

By enabling the user to select a depth value along with an enlargement or reduction option of 3D image data, the present invention enables the user to use the 3D image data with more convenience.

When performing image-processing on the 3D image data, the present invention may also control the depth value respective to the 3D image data, so that the image-processed area can be more emphasized, thereby enabling the user to use the 3D image data with more convenience.

By deciding the area that is to be enlarged or reduced in accordance with the change in the user's position and by deciding the enlargement or reduction ratio in accordance with the change in the user's position, the present invention may provide a more dynamic enlargement and reduction function (or dynamic zoom function).

By performing 3D format output after over-scanning each of the left image data and the right image data, the alignment of the left image data and the right image data may be accurately realized. Thus, the 3D image data may be over-scanned and outputted in a 3D format, and the 3D image data may be outputted with an excellent picture quality and having the noise removed therefrom.

### Brief Description of the Drawings

Fig. 1 illustrates a display device providing 3D contents according to an embodiment of the present invention.
Fig. 2 illustrates an example showing a perspective based upon a distance or parallax between left image data and right image data.
Fig. 3 illustrates a diagram showing an exemplary method for realizing a three-dimensional (3D) image in a display device according to the present invention.
Fig. 4 illustrates exemplary formats of 3D image signals including the above-described left image data and right image data.
Fig. 5 illustrates a flow chart showing a process for image-processing 3D image data in a display device according to an exemplary embodiment of the present invention.
Fig. 6 illustrates a flow chart showing a process for enlarging or reducing (or downsizing) 3D image data according to an exemplary embodiment of the present invention.
Fig. 7 illustrates a first user interface configured to receive an enlargement or reduction (or downsize) command and a second user interface configured to receive a depth control command.
Fig. 8 illustrates an exemplary storage means configured to store a depth value corresponding to an enlargement ratio according to an exemplary embodiment of the present invention.
Fig. 9 illustrates an exemplary procedure of enlarging or reducing 3D image data according to an exemplary embodiment of the present invention.
Fig. 10 illustrates exemplary 3D image data being processed with enlargement or reduction according to an exemplary embodiment of the present invention.
Fig. 11 illustrates an exemplary procedure of enlarging or reducing 3D image data with respect to a change in a user's position according to another exemplary embodiment of the present invention.
Fig. 12 illustrates an example of determining a user position change value (or value of the changed user position) according to an exemplary embodiment of the present invention.
Fig. 13 illustrates an example of having the display device determine an enlarged or reduced area and depth value respective to the user's position change value according to an exemplary embodiment of the present invention.
Fig. 14 illustrates an example of storing an enlargement or reduction ratio and depth value corresponding to user's position change value according to an exemplary embodiment of the present invention.
Fig. 15 illustrates a flow chart showing a process for image-processing 3D image data in a display device according to another exemplary embodiment of the present invention.
Fig. 16 illustrates an exemplary procedure for over-scanning 3D image data according to an exemplary embodiment of the present invention.
Fig. 17 illustrates an example of outputting over-scanned left image data and right image data in a 3D image format according to the present invention.
Fig. 18 illustrates an exemplary result of left image data and right image data respectively being processed with over-scanning and being outputted in a 3D image format according to an exemplary embodiment of the present invention.
Fig. 19 illustrates a block view showing a structure of a display device according to an exemplary embodiment of the present invention.
Fig. 20 illustrates a block view showing a structure of a display device according to another exemplary embodiment of the present invention.
Fig. 21 illustrates an example structure of a pair of shutter glasses according to an exemplary embodiment of the present invention.

### Best Mode for Carrying Out the Present Invention

Reference will now be made in detail to the preferred embodiments of the present invention, examples of which are illustrated in the accompanying drawings. Wherever possible, the same reference numbers will be used throughout the drawings to refer to the same or like parts.

In addition, although the terms used in the present invention are selected from generally known and used terms, the terms used herein may be varied or modified in accordance with the intentions or practice of anyone skilled in the art, or along with the advent of a new technology. Alternatively, in some particular cases, some of the terms mentioned in the description of the present invention may be selected by the applicant at his or her discretion, the detailed meanings of which are described in relevant parts of the description herein. Furthermore, it is required that the present invention is understood, not simply by the actual terms used but by the meaning of each term lying within.

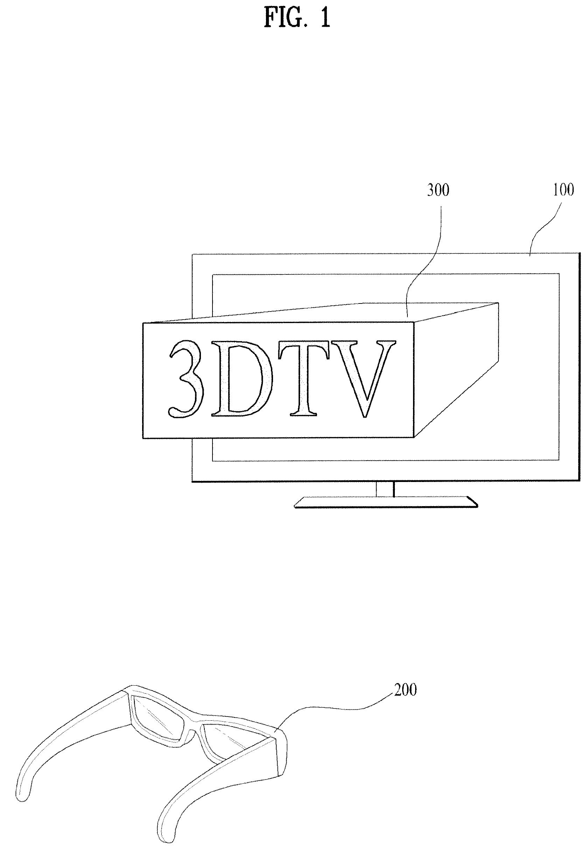

Fig. 1 illustrates a display device providing 3D contents according to an embodiment of the present invention.

According to the present invention, a method of showing 3D contents may be categorized as a method requiring glasses and a method not requiring glasses (or a naked-eye method). The method requiring glasses may then be categorized as a passive method and an active method. The passive method corresponds to a method of differentiating a left-eye image and a right-eye image using a polarized filter. Alternatively, a method of viewing a 3D image by wearing glasses configured of a blue lens on one side and a red lens on the other side may also correspond to the passive method. The active method corresponds to a method of differentiating left-eye and right-eye views by using liquid crystal shutter glasses, wherein a left-eye image and a right-eye image are differentiated by sequentially covering the left eye and the right eye at a predetermined time interval. More specifically, the active method corresponds to periodically repeating a time-divided (or time split) image and viewing the image while wearing a pair of glasses equipped with an electronic shutter synchronized with the cycle period of the repeated time-divided image. The active method may also be referred to as a time split type (or method) or a shutter glasses type (or method). The most commonly known method, which does not require the use of 3D vision glasses, may include a lenticular lens type and a parallax barrier type. More specifically, in the lenticular lens type 3D vision, a lenticular lens plate having cylindrical lens arrays perpendicularly aligned thereon is installed at a fore-end portion of an image panel. And, in the parallax barrier type 3D vision, a barrier layer having periodic slits is equipped on an image panel.

Among the many 3D display methods, Fig. 1 illustrates an example of an active method of the stereoscopic display method. However, although shutter glasses are given as an exemplary means of the active method according to the present invention, the present invention will not be limited only to the example given herein. Therefore, it will be apparent that other means for 3D vision can be applied to the present invention.

Referring to Fig. 1, the display device according to the embodiment of the present invention outputs 3D image data from a display unit. And, a synchronization signal (Vsync) respective to the 3D image data is generated so that synchronization can occur when viewing the outputted 3D image data by using a pair of shutter glasses (200). Then, the Vsync signal is outputted to an IR emitter (not shown) within the shutter glasses, so that a synchronized display can be provided to the viewer (or user) through the shutter glasses.

By adjusting an opening cycle of a left eye liquid crystal display panel and a right eye liquid crystal display panel in accordance with the synchronization signal (Vsync), which is received after passing through the IR emitter (not shown), the shutter glasses (200) may be synchronized with the 3D image data (300) being outputted from the display device (100).

At this point, the display device processes the 3D image data by using the principles of the stereoscopic method. More specifically, according to the principles of the stereoscopic method, left image data and right image data are generated by filming an object using two cameras each positioned at a different location. Then, when each of the generated image data are orthogonally separated and inputted to the left eye and the right eye, respectively, the human brain combines the image data respectively inputted to the left eye and the right eye, thereby creating the 3D image. When image data are aligned so as to orthogonally cross one another, this indicates that the generated image data do not interfere with one another.

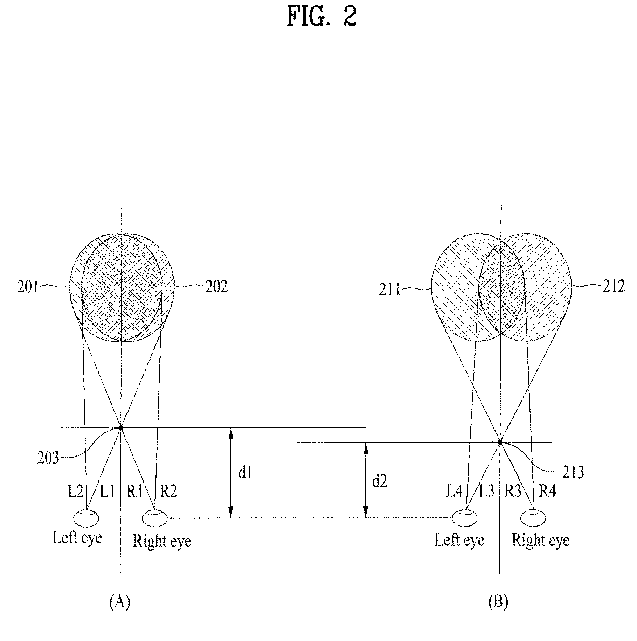

Fig. 2 illustrates an example showing a perspective based upon a distance or parallax between left image data and right image data.

Herein, Fig. 2(a) shows an image position (203) of the image created by combining both image data, when a distance between the left image data (201) and the right image data (202) is small. And, Fig. 2(b) shows an image position (213) of the image created by combining both image data, when a distance between the left image data (211) and the right image data (212) is large.

More specifically, Fig. 2(a) and Fig. 2(b) show different degrees of perspective of the images that are formed at different positions, based upon the distance between the left eye image data and the right eye image data, in an image signal processing device.

Referring to Fig. 2(a), when drawing extension lines (R1, R2) by looking at one side of the right image data (201) and the other side of the right image data (201) from the right eye, and when drawing extension lines (L1, L2) by looking at one side of the left image data (202) and the other side of the left image data (202) from the left eye, the image is formed at a crossing point (203) between the extension line (R1) of the right image data and the extension line (L1) of the left image occurring at a predetermined distance (d1) between the right eye and the left eye.

Referring to Fig. 2(b), when the extension lines are drawn as described in Fig. 2(a), the image is formed at a crossing point (213) between the extension line (R3) of the right image data and the extension line (L3) of the left image occurring at a predetermined distance (d2) between the right eye and the left eye.

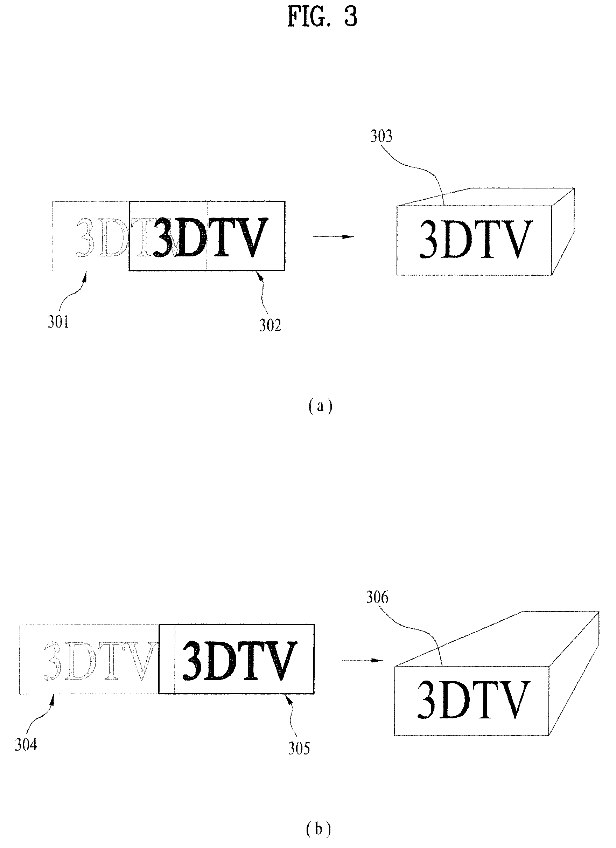

Herein, when comparing d1 of Fig. 2(a) with d2 of Fig. 2(b), indicating the distance between the left and right eyes and the positions (203, 213) where the images are formed, d1 is located further away from the left and right eyes that d2. More specifically, the image of Fig. 2(a) is formed at a position located further away from the left and right eyes than the image of Fig. 3(b).

This results from the distance between the right image data and the left image data (along east-to-west direction referring to Fig. 2).

For example, the distance between the right image data (201) and the left image data (202) of Fig. 2(a) is relatively narrower than the distance between the right image data (203) and the left image data (204) of Fig. 2(b).

Therefore, based upon Fig. 2(a) and Fig. 2(b), as the distance between the left image data and the right image data becomes narrower, the image formed by the combination of the left image data and the right image data may seem to be formed further away from the eyes of the viewer.

Meanwhile, the 3D image data may be realized in a 3D format by applying (or providing) a tilt or depth effect or by applying (or providing) a 3D effect on the 3D image data. Hereinafter, among the above-described methods, a method of providing a depth to the 3D image data will be briefly described.

Fig. 3 illustrates a diagram showing an exemplary method for realizing a three-dimensional (3D) image in a display device according to the present invention.

The case shown in Fig. 3(a) corresponds to a case when a distance between the left image data (301) and the right image data (302) is small, wherein the left image data (301) and the right image data (302) configure the 3D image. And, the case shown in Fig. 3(b) corresponds to a case when a distance between the left image data (301) and the right image data (302) is large, wherein the left image data (301) and the right image data (302) configure the 3D image.

Accordingly, based upon the principle shown in Fig. 2, the 3D image, which is created with respect to the distance between the left image data and the right image data, as shown in Fig. 3(a) and Fig. 3(b), the 3D image (303) created in Fig. 3(a) appears to be displayed (or created) at a distance further apart from the viewer's eyes, and the 3D image (306) created in Fig. 3(b) appears to be displayed (or created) at a distance close to the viewer's eye, *i.e.,* the 3D image (306) created in Fig. 3(b) appears to be relatively more protruded than the 3D image (303) created in Fig. 3(a). Based upon the above-described principle, *i.e.,* by adjusting the distance between the left image data and the right image data, both being combined to configure the 3D image, an adequate level of depth may be applied to the 3D image.

Hereinafter, an example of performing image-processing of the 3D image data in the display device, which provides such 3D images, will be described in detail.

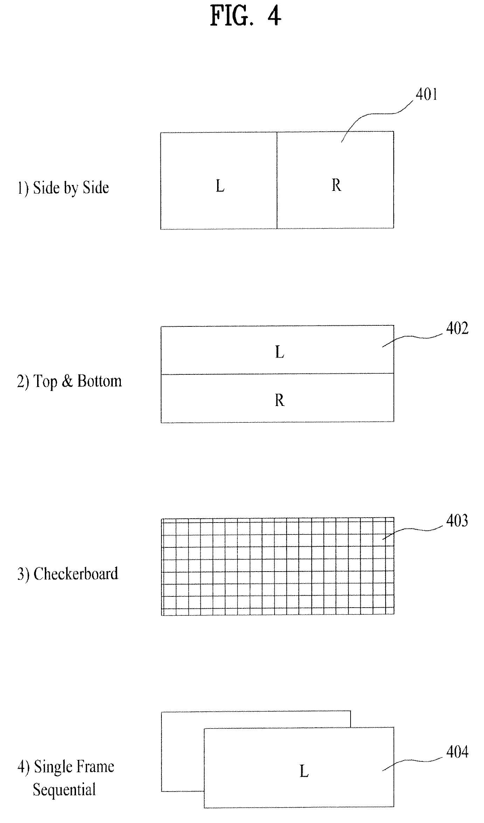

Fig. 4 illustrates exemplary formats of 3D image signals including the above-described left image data and right image data.

Referring to Fig. 4, 3D contents or 3D image signals may be categorized into diverse types, such as (1) a side-by-side format (401), wherein a single object is filmed by two different cameras from different locations, so as to create left image data and right image data, and wherein each of the created left and right images is separately inputted (or transmitted) to the left eye and the right eye, so that the two images can be orthogonally polarized, (2) a top and bottom type (402), wherein a single object is filmed by two different cameras from different locations, so as to create left image data and right image data, and wherein each of the created left and right images is inputted from top to bottom, (3) a checker board format (403), wherein a single object is filmed by two different cameras from different locations, so as to create left image data and right image data, and wherein each of the created left and right images is alternately inputted in a checker board configuration, (3) a Frame sequential format (404), wherein a single object is filmed by two different cameras from different locations, so as to create left image data and right image data, and wherein each of the created left and right images is inputted with a predetermined time interval. Thereafter, the left image data and the right image data, which are inputted in accordance with the above-described formats, may be combined in the viewer's brain so as to be viewed as a 3D image.

Hereinafter, a procedure for performing image-processing on the 3D image data, which are configured to have any one of the above-described formats will be described.

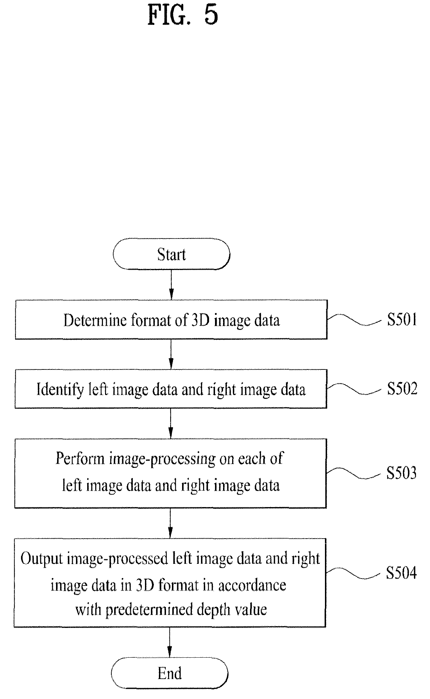

Fig. 5 illustrates a flow chart showing a process for image-processing 3D image data in a display device according to an exemplary embodiment of the present invention.

Referring to Fig. 5, the display device according to an exemplary embodiment of the present invention determines the format of the 3D image data, the 3D image data being the output target, in step (S501).

At this point, when the 3D image data are received from an external input source, format information of the 3D image data may also be received from the external input source. And, in case a module configured to determine the format of the corresponding 3D image data is included in the display device, the module may determine the format of the 3D image data, the 3D image data being the output target.

Also, the display device may receive the 3D image data in a format selected by the user.

According to the exemplary embodiment of the present invention, the determined format of the 3D image data may correspond to any one of the side by side format, the checker board format, and the Frame sequential format.

Thereafter, in step (S502), based upon the format of the 3D image data determined in step (S501), the display device identifies left image data and right image data of the 3D image data.

For example, in case the format of the 3D image data is determined to be the side by side format, a left image may be determined as the left image data, and a right image may be determined as the right image data.

In step (S503), the display device performs image-processing on each of the left image data and the right image data of the 3D image data.

At this point, diverse processes associated with the output of the 3D image data may be applied to the image-processing procedure. For example, in case over-scanning is applied to the 3D image data, the 3D image data being the output target, the left image data may be processed with over-scanning, and then the right image data may be processed with over-scanning.

Also, in another example, when the user selects an option to either enlarge or reduce (or downsize) the 3D image data, the display device may enlarge or reduce the left image data, and then the display device may enlarge or reduce the right image data.

In step (S504), the display device may output the image-processed left image data and right image data in a 3D image format in accordance with a predetermined depth value.

At this point, the depth value according to which the left image data and the right image data are outputted may correspond to a pre-stored value, or correspond to a value decided during the image-processing procedure, or corresponds to a value inputted by the user.

For example, in case the user inputs a depth control command with respect to the 3D image data, after receiving the depth control command, the display device performs pixel shift on the left image data and the right image data, so as to output the 3D image data in accordance with a depth value corresponding to the depth control command.

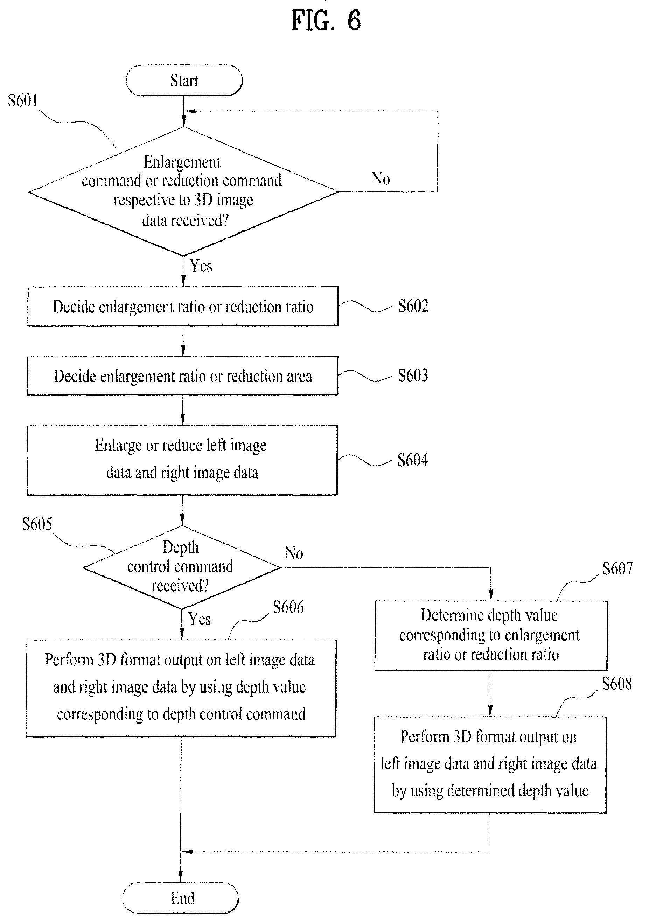

Fig. 6 illustrates a flow chart showing a process for enlarging or reducing (or downsizing) 3D image data according to an exemplary embodiment of the present invention.

In step (S601), the display device determines whether or not an enlargement command or reduction command respective to the 3D image data is received.

Herein, the enlargement command or reduction command respective to the 3D image data may either be inputted by the user through a first user interface, or be inputted through a remote control device.

Additionally, according to an embodiment of the present invention, if the position of the user is changed, the display device may sense the change in the user's position and may configure the enlargement or reduction command by using the value of the sensed position change.

Based upon the determined result of step (S601), when the enlargement command or reduction command respective to the 3D image data is received, in step (S602), the display device may determine an enlargement ratio or a reduction ratio corresponding to the enlargement command or the reduction command.

In step (S603) the display device decides an enlargement or reduction area in the 3D image data. At this point, the enlargement or reduction area in the 3D image data may be designated by the user. And, in case no designation is made by the user, a pre-decided area may be decided as the enlargement or reduction area. Also, according to the embodiment of the present invention, the enlargement or reduction area may also be designated in accordance with the user position change value.

In step (S604), the display device enlarges or reduces each enlargement or reduction area of the left image data and the right image data by using the decided enlargement or reduction ratio.

Subsequently, in step (S605), the display device determines whether or nor a depth control command is received.

The depth control command respective to the 3D image data may be inputted by the user through a second user interface, or may be inputted through a remote control device.

According to the embodiment of the present invention, the first user interface receiving the enlargement command or reduction command respective to the 3D image data and the second user interface receiving the depth control command respective to the 3D image data may be outputted to a single display screen. And, the user may select an enlargement or reduction ratio from the first user interface, and the user may also select a depth value that is to be outputted from the second user interface.

Based upon the determined result of step (S605), when the depth control command is not received, in step (S607), the display device determines a depth value corresponding to the enlargement ratio or the reduction ratio. At this point, depth values respective to each of plurality of enlargement ratios or reduction ratios may be pre-determined and stored in a storage means included in the display device.

According to the embodiment of the present invention, depth values respective to each of the enlargement ratios or reduction ratios may be configured to have a consistent value or may each be configured to have a different value.

For example, as the enlargement ratio becomes larger, the depth value according to which the enlarged area of the 3D image data is outputted may also be determined to have a value closer to the user.

Thereafter, in step (S608), the display device uses the depth value determined in step (S607) so as to output the enlarged or reduced left image data and right image data in a 3D format.

Based upon the determined result of step (S605), when it is determined that a depth control command is received, in step (S606), the display device outputs the enlarged or reduced left image data and right image data by using a depth value corresponding to the depth control command.

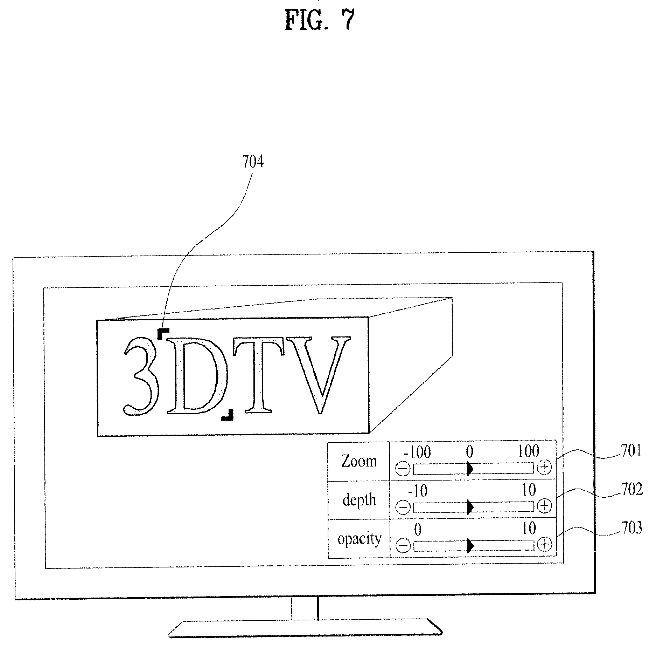

Fig. 7 illustrates a first user interface configured to receive an enlargement or reduction (or downsize) command and a second user interface configured to receive a depth control command.

Referring to Fig. 7, the display device according to the embodiment of the present invention may display the first user interface (701) receiving the enlargement command or the reduction command respective to the 3D image data and the second user interface (702) receiving the depth control command respective to the 3D image data on the display screen. Evidently, according to the embodiment of the present invention, the display device may only display the first user interface (701) on the display screen, or the display device may only display the second user interface (702).

After designating the enlargement area or reduction area (or area that is to be enlarged or reduced) (704), the user may select an enlargement or reduction ratio from the first user interface (701), and the user may select a depth value, according to which the 3D image data are to be outputted, from the second user interface (702).

The designation of the area that is to be enlarged or reduced (704) in the 3D image data may be performed by using diverse methods. For example, the enlargement or reduction area (704) may be designated with a predetermined pointer by using a remote controller. Alternatively, the display device may sense a change in the user's position, which will be described later on in detail, and may designate the enlargement or reduction area (704) corresponding to the change in the user's position.

Additionally, if no designation is separately made by the user, a predetermined area (e.g., a central portion (or area) of the 3D image) may be decided as the enlargement or reduction area. Also, according to the embodiment of the present invention, the enlargement or reduction area of the 3D image may also be designated in accordance with a user position change value.

When an enlargement or reduction ratio is selected from the first user interface (701), the left image data and the right image data of the 3D image data may be enlarged or reduced, as described above. And, if it is determined that a depth control command is received in accordance with the user's selection of a depth value, the display device may output the left image data and the right image data of the 3D image data, which are enlarged or reduced in accordance with the corresponding enlargement ratio or reduction ratio, by using the depth value corresponding to the received depth control value.

Accordingly, by enabling the user to select a depth value along with the enlargement or reduction of the 3D image data, the present invention may enable the user to use the 3D image data with more convenience.

Furthermore, according to the embodiment of the present invention, in addition to the enlargement or reduction and the depth control of the 3D image data, the display device may additionally output a third user interface (703), which may set up a transparency level in the 3D image data. When a transparency level is selected from the third user interface (703), the selected transparency level may be applied to the enlarged or reduced left image data or right image data.

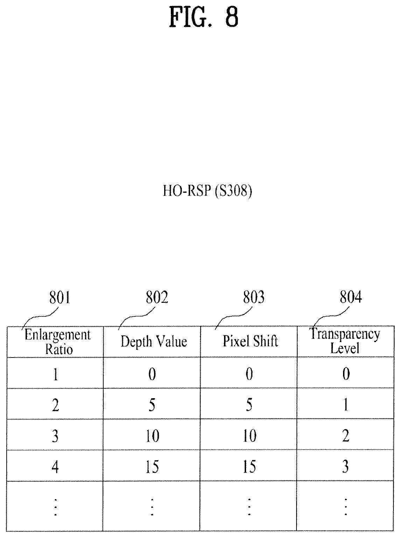

Fig. 8 illustrates an exemplary storage means configured to store a depth value corresponding to an enlargement ratio according to an exemplary embodiment of the present invention.

Referring to Fig. 8, the display device according to the embodiment of the present invention may set up (or configure) a depth value corresponding to the enlargement ratio or reduction ratio.

Herein, a depth value (802) corresponding to each of the plurality of enlargement ratios or reduction ratios (801) may be pre-determined and stored in a storage means, which is included in the display device.

According to the embodiment of the present invention, depth values respective to each of the enlargement ratios or reduction ratios (801) may be configured to have a consistent value or may each be configured to have a different value. For example, as the enlargement ratio becomes larger, the depth value according to which the enlarged area of the 3D image data is outputted may also be determined to have a value closer to the user.

Moreover, the display device may also store pixel number information (or information on a number of pixels) (803) by which the left image data and the right image data are to be shifted in order to control (or adjust) the depth value.

Also, in case the transparency level is adjusted with respect to the enlargement ratio or the reduction ratio, as described above, the display device may also store transparency level information (804) corresponding to the enlargement ratios or reduction ratios (801).

Therefore, when the display device receives an enlargement or reduction command respective to the 3D image data, the display device may determine an enlargement ratios or reduction ratio (801), so as to apply the determined enlargement ratios or reduction ratio (801) to the left image data and the right image data. Thereafter, the display device may also shift the left image data and the right image data by a pixel shift value corresponding to the determined enlargement ratios or reduction ratio (801), so as to output the 3D image data by using the depth value (802) corresponding to the enlargement ratios or reduction ratio.

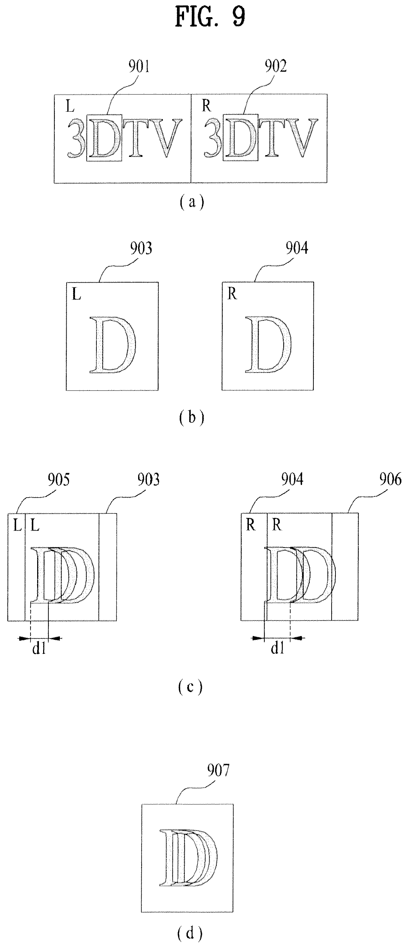

Fig. 9 illustrates an exemplary procedure of enlarging or reducing 3D image data according to an exemplary embodiment of the present invention. Fig. 9 shows an example 3D image data being enlarged, and, accordingly, the reduction procedure may also be processed by using the same method.

Referring to Fig. 9, when an enlargement area within the 3D image data is decided, the display device according to the embodiment of the present invention enlarges the left image data (901) and the right image data (902) of the 3D image data by a decided enlargement ratio.

Thereafter, in order to control the depth value of the enlarged 3D image data, the display device performs pixel shifting on the enlarged left image data (903) and the enlarged right image data (904). As described above, at this point, the controlled depth value may be received from the second user interface, or may be decided in accordance with the corresponding enlargement ratio.

For example, the left image data (903) may be pixel-shifted leftwards by d1 number of pixels, and the right image data (904) may be pixel-shifted rightwards by d1 number of pixels.

Subsequently, the pixel-shifted left image data (905) and the pixel-shifted right image data (906) are outputted as the 3D image data.

At this point, the display device may use the determined format information of the 3D image data, so as to output the 3D image data in accordance with at least one of a line by line format, a frame sequential format, and a checker board format.

Furthermore, whenever required, based upon the output method of the display device, the display device may change the format of the 3D image data, and the display device may output the 3D image data according to the changed format.

For example, in case the display device provides the 3D image data by using the method requiring the usage of shutter glasses, the display device may change (or convert) the 3D image data corresponding to any one of the line by line format, the top and bottom format, and the side by side format to 3D image data the frame sequential format, thereby outputting the changed (or converted) the 3D image data.

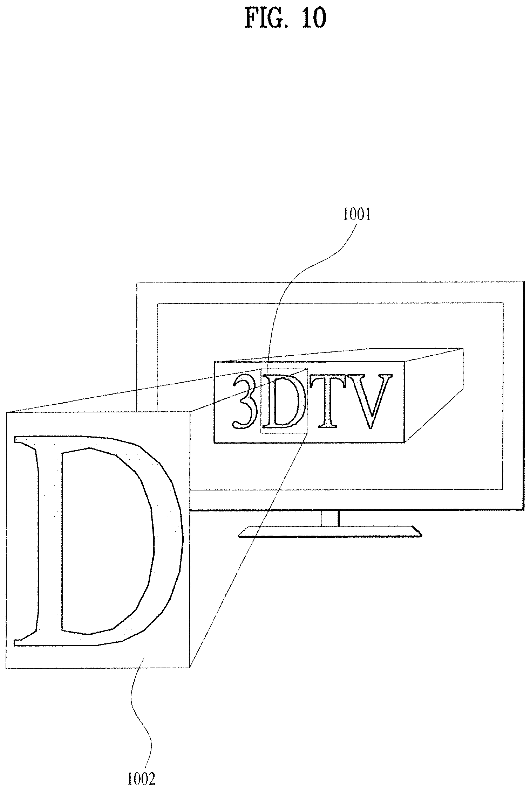

Fig. 10 illustrates exemplary 3D image data being processed with enlargement or reduction according to an exemplary embodiment of the present invention.

Referring to Fig. 10, the area selected for enlargement or reduction in the 3D image data may be either enlarged or reduced and may be processed with depth-control, thereby being outputted.

More specifically, for the area selected for enlargement (1001) in the original (or initial) 3D image data, the corresponding area of the left image data and the corresponding area of the right image data are each processed with enlargement and depth control, thereby being outputted as shown in reference numeral (1002) of Fig. 10.

At this point, according to the embodiment of the present invention, the original 3D image data (1001) prior to being processed with enlargement or reduction may also be directly outputted without modification. And, in this case, the enlarged 3D image data (1002) may be outputted after having its transparency level adjusted, so that the enlarged 3D image data (1002) may be viewed along with the original 3D image data (1001).

Accordingly, when image-processing is performed on the 3D image data, the present invention also controls the depth value respective to the 3D image data, so that the image-processed area can be more emphasized (or outstanding). Thus, the user may be capable of using the 3D image data with more convenience.

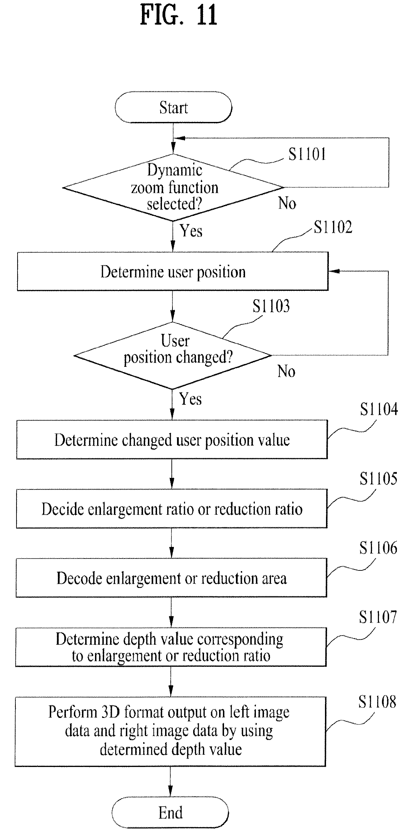

Fig. 11 illustrates an exemplary procedure of enlarging or reducing 3D image data with respect to a change in a user's position according to another exemplary embodiment of the present invention.

Referring to Fig. 11, in step (S1101), the display device according to the embodiment of the present invention determines whether or not the user selects a predetermined mode (e.g., dynamic zoom function) according to which an enlargement function or a reduction function may be controlled in accordance with the user's position.

Based upon the result of step (S1101), when it is determined that the user selects the corresponding function, in step (S1102), the display device determines the current position of the user.

At this point, the method for determining the user's position according to the present invention may be diversely realized. Herein, in case the display device corresponds to a display device non-requiring the use of glasses (or a non-glasses type display device), a sensor included in the display device may detect the user's position and create its corresponding position information. And, in case the display device corresponds to a display device requiring the use of glasses (or a glasses type display device), a sensor included in the display device may detect the position of the shutter glasses or may receiving position information from the shutter glasses, thereby being capable of acquiring (or receiving) the position information of the shutter glasses.

For example, after having a detecting sensor sense information for detecting the position of the user's position, the shutter glasses transmits the sensed sensing information to the display device. And, the display device receives the sensing information, which is received from the shutter glasses, and, then, the display device uses the received sensing information so as to determine the position of the shutter glasses, *i.e.,* the user's position.

Furthermore, after mounting an IR sensor on the display device, the display device detects IR signals transmitted from the shutter glasses, so as to respectively calculate distances between the display device and x, y, and z axises, thereby determining the position of the shutter glasses.

Additionally, according to another embodiment of the present invention, the display device may be provided with a camera module that may film (or record) an image. Then, after filming the image, the camera module may recognize a pre-stored pattern (shutter glasses image or user's front view image) from the filmed image. Thereafter, the camera module may analyze the size and angle of the recognized pattern, thereby determining the position of the user.

Also, an IR transmission module may be mounted on the display device, and an IR camera may be mounted on the shutter glasses. Thereafter, the position of the shutter glasses may be determined by analyzing the image data of the IR transmission module filmed (or taken) by the IR camera. At this point, when multiple IR transmission modules are mounted on the display device, images of the multiple IR transmission modules filmed by the shutter glasses may be analyzed so as to determine the position of the shutter glasses. And, the position of the shutter glasses may be used as the position of the user.

Based upon the result of step (S1103), when it is determined that the user's position is changed, in step (S1104) the display device may determine a value of the changed user position.

In step (S1105), the display device determines the enlargement ratio or reduction ratio respective to the 3D image data based upon the determined value of the changed position (or changed position value). Then, in step (S1106), the display device decides the enlargement or reduction area.

Herein, the display device according to the embodiment of the present invention senses the user's position at predetermined time intervals. And, when a change occurs in the sensed user position, a vector value corresponding to the changed position value is generated, and the enlargement ratio or reduction ratio and the enlargement area or reduction area may be decided with respect to the generated vector value.

Subsequently, in step (S1107), the display device determines a depth value corresponding to the enlargement or reduction ratio. The depth value corresponding to the enlargement or reduction ratio may be stored in advance in a storage means, as described above with reference to Fig. 8.

In step (S1108), the display device enlarges or reduces the decided enlargement area or reduction area of the left image data and the right image data of the 3D image data, in accordance with the decided enlargement ratio or reduction ratio. Then, the display device may output the processed image data in a 3D format by using the depth value corresponding to the enlargement ratio or reduction ratio.

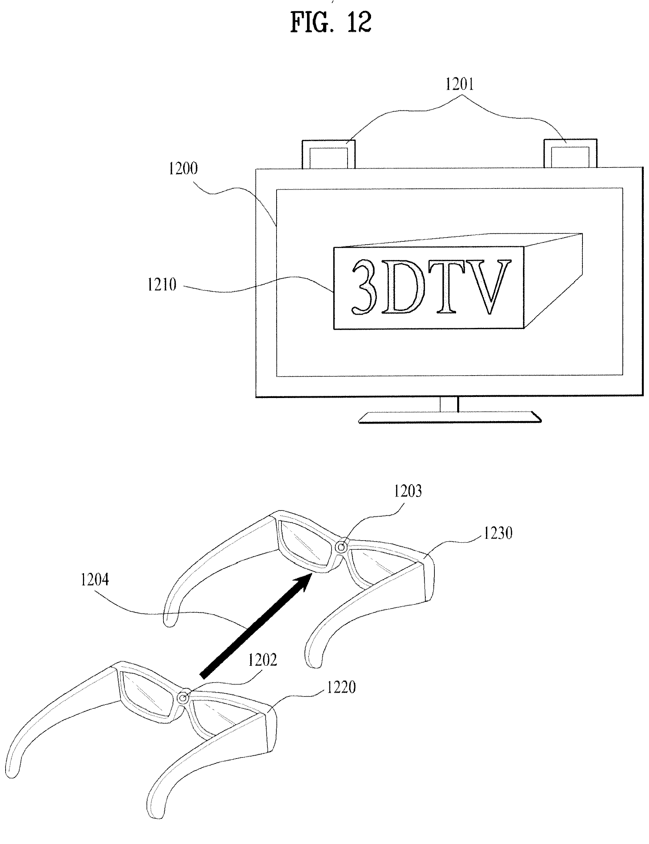

Fig. 12 illustrates an example of determining a user position change value (or value of the changed user position) according to an exemplary embodiment of the present invention. Fig. 12 shows an example of 3D image data (1210) being outputted as a method type requiring the use of glasses (or outputted in a glasses type method).

Referring to Fig. 12, the display device (1200) according to the embodiment of the present invention may include a position detecting sensor (1201) and may determine whether or not a position of the shutter glasses (1220) changes.

The shutter glasses (1220, 1230) may include an IR output unit or IR sensor (1202, 1203), and the shutter glasses (1220, 1230) may be implemented so that the display device (1200) may be capable of determining the position of the shutter glasses.

In case the position of the shutter glasses changes from reference numeral (1220) to reference numeral (1230), the display device (1200) may generate a vector value (1204) corresponding to the changed position value.

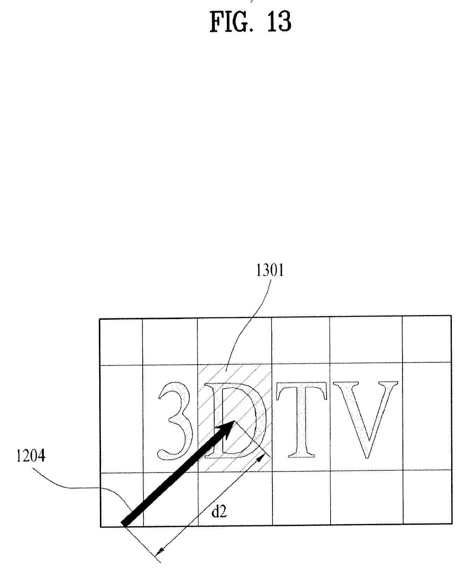

Fig. 13 illustrates an example of having the display device determine an enlarged or reduced area and depth value respective to the user's position change value according to an exemplary embodiment of the present invention.

Referring to Fig. 13, the display device according to the embodiment of the present invention determines a size (d2) and direction of the vector value (1204) corresponding to the changed user position value. And, then, the display device may decide an enlargement or reduction area and a depth value of the enlargement area or reduction area in accordance with the determined size and direction of the vector value (1204).

For example, the display device may determine a predetermined area (1301) of the 3D image data (1210) corresponding to the direction of the vector value, and, then, the display device may decide the corresponding area as the area that is to be enlarged or reduced.

For example, if the vector value corresponds to a direction approaching the display device, the display device may decide to enlarge the 3D image data. And, if the vector value corresponds to a direction being spaced further apart from the display device, the display device may decide to reduce the 3D image data.

Furthermore, the enlargement or reduction ratio may be decided in accordance with a size (d2) of the vector value, and the enlargement or reduction ratio corresponding to the size of each vector value size may be pre-stored in the storage means.

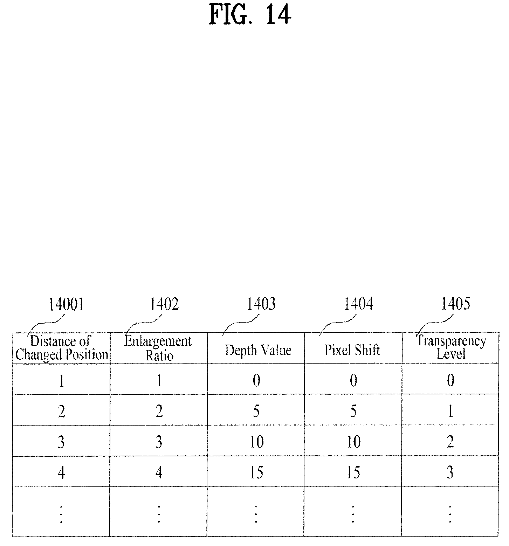

Fig. 14 illustrates an example of storing an enlargement or reduction ratio and depth value corresponding to user's position change value according to an exemplary embodiment of the present invention.

Referring to Fig. 14, the display device according to the embodiment of the present invention may store in advance (or pre-store) an enlargement or reduction ratio (1402) corresponding to a changed user position value (*e.g.,* changed distance, 1401) and a depth value (1403) corresponding to the changed position value.

Also, a pixel shift value (1404), according to which image data are to be shifted, in order to additionally output the enlargement or reduction area of the 3D image data by using the depth value (1403), and a transparency level value (1405) corresponding to the enlargement or reduction ratio may also be additionally stored.

A procedure of enlarging or reducing corresponding areas of the left image data and the right image data and of outputting the processed image data in a 3D format having the respective depth value has already been described above in detail.

Therefore, by deciding the area that is to be enlarged or reduced in accordance with the change in the user's position and by deciding the enlargement or reduction ratio in accordance with the change in the user's position, the present invention may provide a more dynamic enlargement and reduction function (or dynamic zoom function). For example, based upon an approached direction and distance of the user, by enlarging the corresponding area and by applying a depth value so that the image can seem to approach more closely to the user, the present invention may provide the user with a 3D image including 3D image data with a more realistic (or real-life) effect.

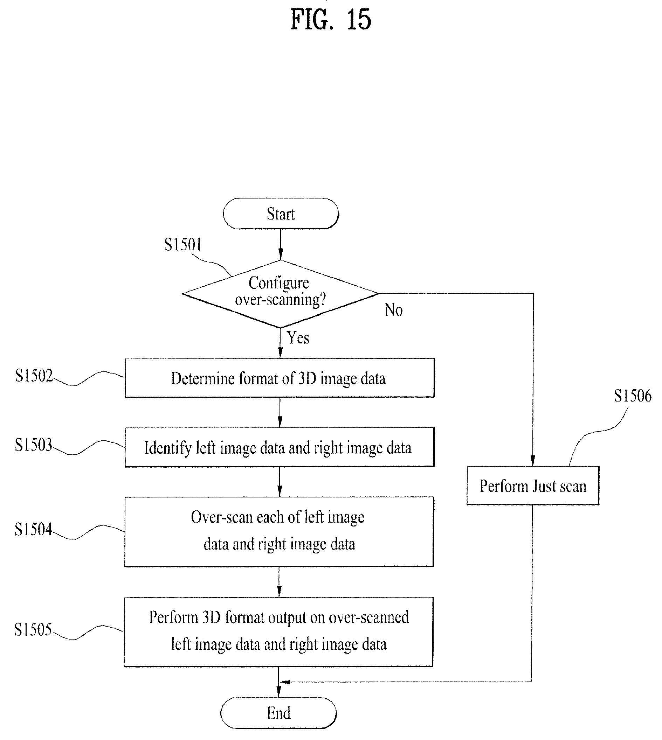

Fig. 15 illustrates a flow chart showing a process for image-processing 3D image data in a display device according to another exemplary embodiment of the present invention.

Referring to Fig. 15, in step (S1501), when outputting the 3D image data, the display device according to the embodiment of the present invention determines whether or not an over-scanning configuration is set up.

Herein, when a noise exists in an edge portion (or border) of an image signal, an over-scan refers to a process of removing the edge portion of the image signal and scaling the image signal, thereby outputting the processed image signal, in order to prevent the picture quality from being deteriorated.

Over-scanning configurations may be made in advance by the display device, based upon the 3D image data types or source types providing the 3D image data. Alternatively, the user may personally configure settings on whether or not an over-scanning process is to be performed on the 3D image data that are to be outputted, by using a user interface.

In step (S1502), the display device determines the format of the 3D image data. The process of determining the format of the 3D image data has already been described above with reference to Fig. 5 and Fig. 6.

More specifically, when the 3D image data are received from an external input source, format information of the 3D image data may also be received from the external input source. And, in case a module configured to determine the format of the corresponding 3D image data is included in the display device, the module may determine the format of the 3D image data, the 3D image data being the output target. Also, the display device may receive the 3D image data in a format selected by the user.

For example, the determined format of the 3D image data may correspond to any one of the side by side format, the checker board format, and the Frame sequential format.

Thereafter, in step (S1503), based upon the format of the 3D image data determined in step (S1501), the display device identifies left image data and right image data of the 3D image data.

For example, in case the format of the 3D image data is determined to be the side by side format, a left image may be determined as the left image data, and a right image may be determined as the right image data.

In step (S1504), the display device performs over-scanning on each of the left image data and the right image data of the 3D image data. Then, the display device outputs the over-scanned left image data and the over-scanned right image data in a 3D format.

At this point, the depth value according to which the left image data and the right image data are being outputted, may correspond to a pre-stored value, or may correspond to a value decided during the image-processing procedure, or may correspond to a value inputted by the user.

For example, in case the user inputs a depth control command respective to the 3D image data, after receiving the inputted depth control command, the display device may output the image-processed left image data and the image-processed right image data by using a depth value corresponding to the received depth control command.

Based upon the result of step (S1501), when over-scanning is not set up, in step (S1506), the display device performs a Just scan process on the 3D image data and outputs the just-scanned 3D image data. Herein, the Just scan process refers to a process of not performing over-scanning and of minimizing the process of manipulating the image signal.

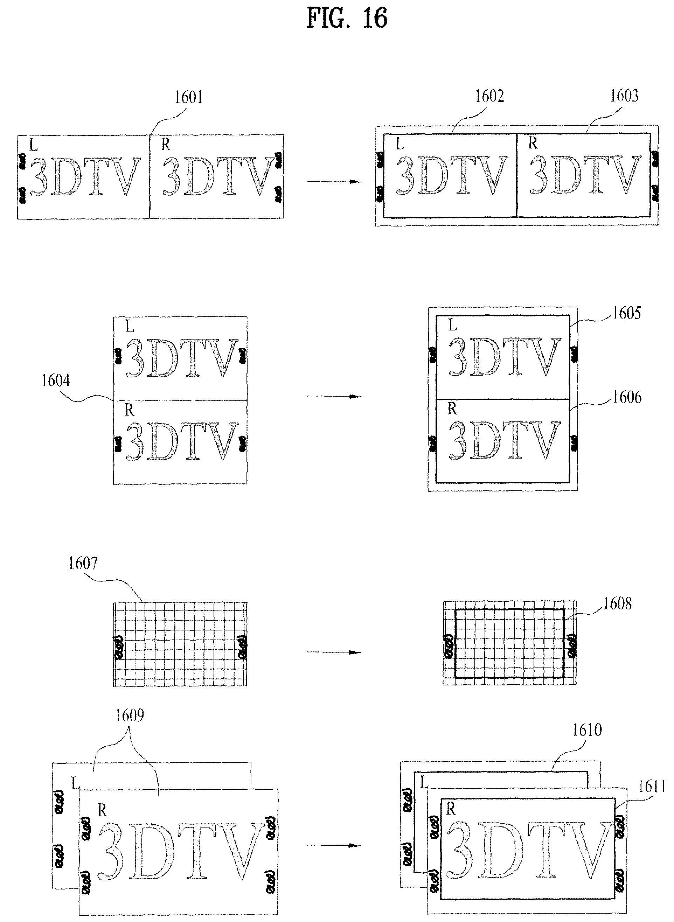

Fig. 16 illustrates an exemplary procedure for over-scanning 3D image data according to an exemplary embodiment of the present invention.

Referring to Fig. 16, the display device according to the embodiment of the present invention determines the format of the 3D image data (1601, 1602), and, then, based upon the determined format, the display device identifies the left image data and the right image data and processes each of the identified left image data and right image data with over-scanning.

For example, in case the format of the 3D image data (1601) corresponds to the side by side format, the left side area may be determined as the left image data, and the right side area may be determined as the right image data.

Subsequently, after over-scanning the left image data and over-scanning the right image data, the display device outputs the over-scanned left image data (1602) and the over-scanned right image data (1603) in a 3D format.

Similarly, in case the format of the 3D image data (1604) corresponds to the top and bottom format, after determining the top (or upper) area as the left image data, and after determining the bottom (or lower) area as the right image data, the display device performs over-scanning on the left image data and performs over-scanning on the left image data, and, then, the display device outputs the over-scanned left image data (1605) and the over-scanned right image data (1606) in a 3D format.

Additionally, in case the format of the 3D image data (1607) corresponds to the checker board format, after determining the left image data area and the right image data area, the display device uses the determined result, so as to decide the area that is to be processed with over-scanning and to process the corresponding area with over-scanning. Thereafter, the display device may output the over-scanned 3D image data (1608) in the 3D format. Herein, the over-scanned area (1608) may be decided so that the order of the left image data and the right image data are not switched, thereby preventing an error in the output of the 3D image data from occurring due to the over-scanning process.

Furthermore, in case the format of the 3D image data (1609) corresponds to the frame sequential format, the display device determines each of the left image data and the right image data, which are sequentially inputted, and performs over-scanning on each of the inputted left image data and the right image data (1610, 1611), thereby outputting the over-scanned image data in a 3D format.

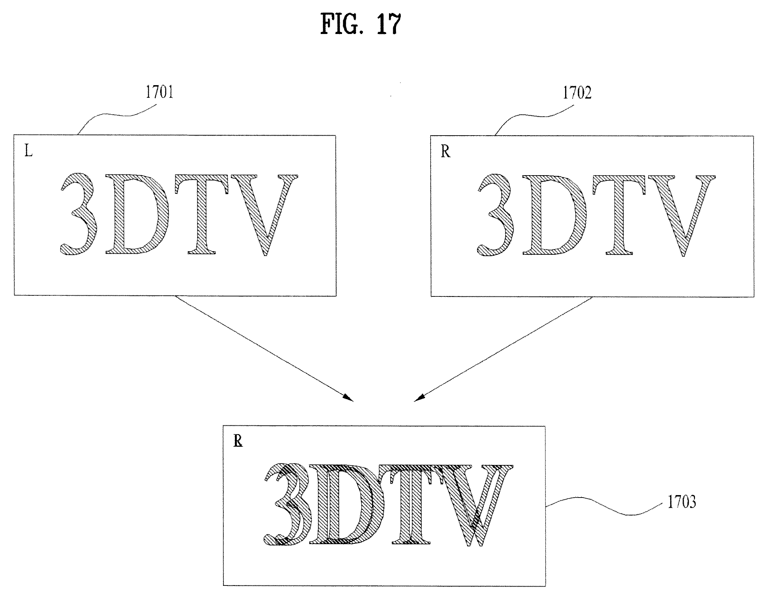

Fig. 17 illustrates an example of outputting over-scanned left image data and right image data in a 3D image format according to the present invention.

Referring to Fig. 17, the display device according to the embodiment of the present invention outputs over-scanned left image data (1701) and over-scanned right image data (1702) as 3D image data (1703).

At this point, the display device may use the determined format information of the 3D image data, so as to output the 3D image data in accordance with at least one of a line by line format, a frame sequential format, and a checker board format.

Furthermore, whenever required, based upon the output method of the display device, the display device may change the format of the 3D image data, and the display device may output the 3D image data according to the changed format.

For example, in case the display device provides the 3D image data by using the method requiring the usage of shutter glasses, the display device may change (or convert) the 3D image data corresponding to any one of the line by line format, the top and bottom format, and the side by side format to 3D image data the frame sequential format, thereby outputting the changed (or converted) the 3D image data.

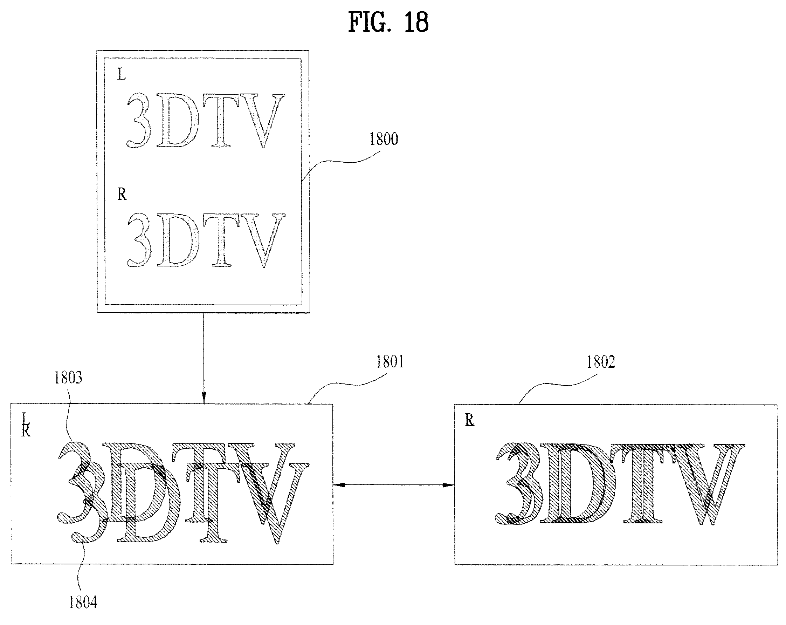

Fig. 18 illustrates an exemplary result of left image data and right image data respectively being processed with over-scanning and being outputted in a 3D image format according to an exemplary embodiment of the present invention.

Referring to Fig. 18, a comparison is made between an output result (1802) of over-scanning each of left image data and right image data by using the present invention and outputting the over-scanned image data in a 3D format and an output result (1801) of over-scanning the 3D image data (1800) itself by using the related art method and outputting the over-scanned 3D image data in a 3D format. Accordingly, it is apparent that the 3D image corresponding to the output result (1802) of over-scanning each of left image data and right image data by using the present invention and outputting the over-scanned image data in a 3D format has a more accurate and greater picture quality.

More specifically, in case of the 3D image data (1801) created by over-scanning the 3D image data (1800) itself by using the related art method, the alignment of the left image data (1803) and the right image data (1804) is not accurately realized. And, accordingly, deterioration may occur in the 3D image data, or the image may fail be outputted in the 3D format. However, in case of the related art, 3D format output is performed after over-scanning each of the left image data and the right image data. Therefore, the alignment of the left image data and the right image data may be accurately realized. Accordingly, the 3D image data (1802) may be over-scanned and outputted in a 3D format, and the 3D image data (1802) may be outputted with an excellent picture quality and having the noise removed therefrom.

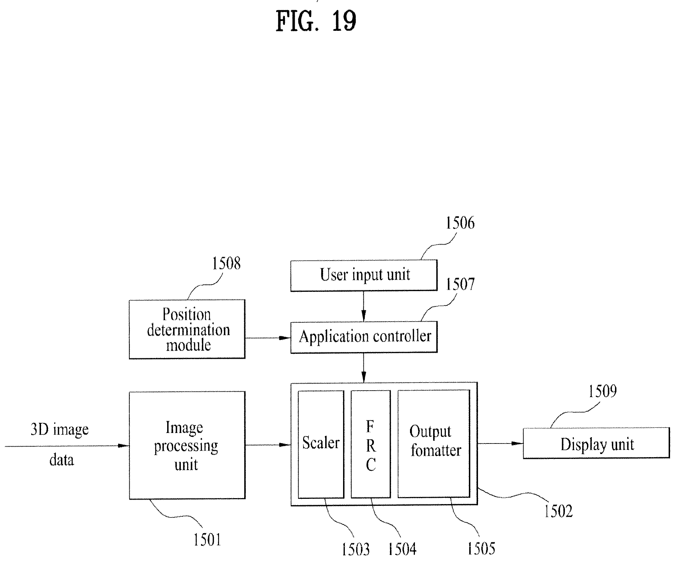

Fig. 19 illustrates a block view showing a structure of a display device according to an exemplary embodiment of the present invention. Referring to Fig. 19, the display device according to the embodiment of the present invention may additionally include an image processing unit (1501) configured to perform image-processing on 3D image data based upon panel and user settings of a display unit, a 3D format converter (1505) configured to output 3D image data in an adequate format, a display unit (1509) configured to output the 3D image data processed to have the 3D format, a user input unit (1506) configured to receive user input, an application controller (1507), and a position determination module (1508).

According to the embodiment of the present invention, the display device may be configured to include a scaler (1503) configured to perform image-processing on each of left image data and right image data of 3D image data, an output formatter (1505) configured to output the image-processed left image data and right image data by using a predetermined depth value, and a user input unit (1506) configured to receive a depth control command respective to the 3D image data. According to the embodiment of the present invention, the image-processing procedure may include the over-scanning process.

At this point, the output formatter (1505) may output the image-processed left image data and right image data in a 3D format by using a depth value corresponding to the depth control command.

Also, according to the embodiment of the present invention, the scaler (1503) may enlarge or reduce each of the left image data and right image data of the 3D image by an enlargement ratio or a reduction ratio corresponding to the enlargement command or reduction command respective to the 3D image data.

At this point, the application controller (1507) may output the first user interface receiving the enlargement command or reduction command respective to the 3D image data and the second user interface receiving the depth control command respective to the 3D image data to the display unit (1509), and the user input unit (1506) may receive enlargement commands or reduction commands, and depth control commands. Also, the user input unit (1506) may also be designated with an enlargement area or a reduction area in the 3D image data.

An FRC (1504) adjusts (or controls) a frame rate of the 3D image data to an output frame rate of the display device.

The scaler (1503) respectively enlarges or reduces the designated enlargement or reduction area of the left image data and the right image data included in the 3D image data in accordance with the corresponding enlargement ratio or reduction ratio.

The output formatter (1505) may output the enlarged or reduced left image data and right image data in a 3D format.

At this point, the output formatter (1505) may also output the enlarged or reduced left image data and right image data by using a depth value corresponding to the enlargement ratio or reduction ratio. And, in case, the user input unit (1506) receives a depth control command respective to the 3D image data, the output formatter (1505) may also output the enlarged or reduced left image data and right image data by using a depth value corresponding to the received depth control command.

Furthermore, the display device may further include a position determination module (1508) configured to determine a changed user position value. And, the scaler (1503) may decide an enlargement ratio or reduction ratio and an enlargement area or reduction area respective to the 3D image data in accordance with the determined changed user position value. Then, the scaler (1503) may enlarge or reduce the respective areas decided to be enlarged or reduced in the left image data and the right image data of the 3D image data in accordance with the decided enlargement ratio or reduction ratio.

At this point, the position determination module (1508) senses the user's position at predetermined time intervals. And, when a change occurs in the sensed user position, the position determination module (1508) generates a vector value corresponding to the changed position value, and the scaler (1503) may decide the enlargement ratio or reduction ratio and the enlargement area or reduction area with respect to the generated vector value.

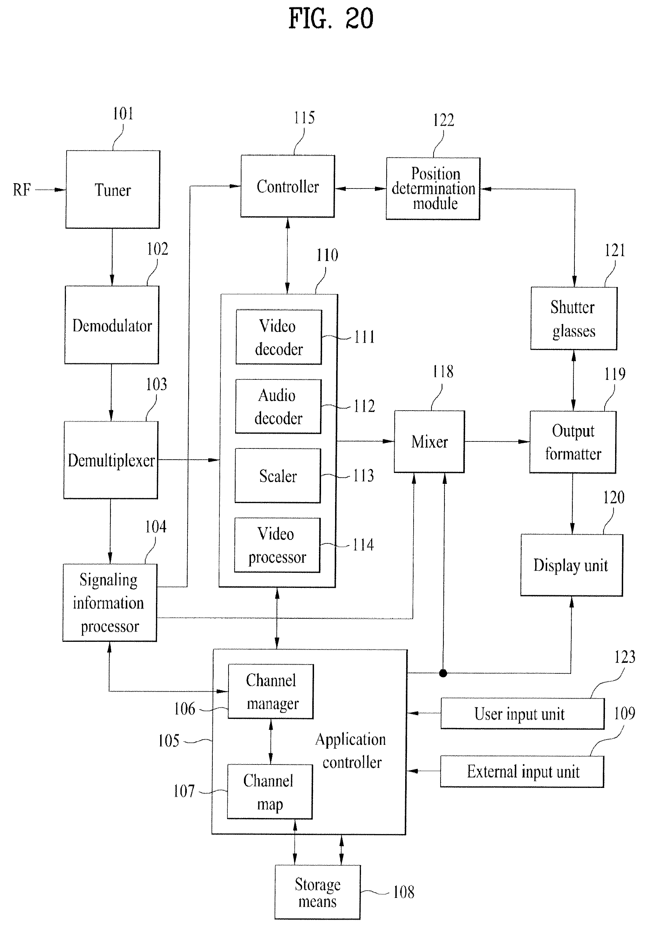

Fig. 20 illustrates a block view showing a structure of a display device according to another exemplary embodiment of the present invention. Fig. 20 illustrates a block view showing the structure of the display device, when the display device is a digital broadcast receiver.

Referring to Fig. 20, the digital broadcast receiver according to the present invention may include a tuner (101), a demodulator (102), a demultiplexer (103), a signaling information processor (104), an application controller (105), a storage unit (108), an external input receiver (109), a decoder/scaler (110), a controller (111), a mixer (118), an output formatter (119), and a display unit (120). In addition to the configuration shown in Fig. 20, the digital broadcast receiver may further include additional elements.

The tuner (101) tunes to a specific channel and receives a broadcast signal including contents.

The demodulator (102) demodulates the broadcast signal received by the tuner (101).

The demultiplexer (103) demultiplexes an audio signal, a video signal, and signaling information from the demodulated broadcast signal. Herein, the demultiplexing process may be performed through PID (Packet Identifier) filtering. Also, in the description of the present invention, SI (System Information), such as PSI/PSIP (Program Specific Information/Program and System Information Protocol), may be given as an example of the signaling information for simplicity.

The demultiplexer (103) outputs the demultiplexed audio signal/video signal to the decoder/scaler (110), and the demultiplexer (103) outputs the signaling information to the signaling information processor (104).

The signaling information processor (104) processes the demultiplexed signaling information, and outputs the processed signaling information to the application controller (105), the controller (115), and the mixer (118). Herein, the signaling processor (104) may be included inside a database (not shown), which may be configured to temporarily store the processed signaling information.

The application controller (105) may include a channel manager (106) and a channel map (107). The channel manager (106) configures and manages a channel map (107) based upon the signaling information. And, in accordance with a specific user input, the channel manager (106) may perform control operations, such as channel change, based upon the configured channel map (107).

The decoder/scaler (110) may include a video decoder (111), an audio decoder (112), a scaler (113), and a video processor (114).

The video decoder/audio decoder (111/112) may receive and processed the demultiplexed audio signal and video signal.

The scaler (113) may perform scaling on the signal, which is processed by the decoders (111/112), to a signal having an adequate size.

The user input unit (123) may include a user input unit (not shown) configured to receive a key input inputted by a user through a remote controller.

The application controller (105) may further include an OSD data generator (not shown) configured for the UI configuration. Alternatively, the OSD data generator may also generate OSD data for the UI configuration in accordance with the control operations of the application controller (105).

The display unit (120) may output contents, UI, and so on.

The mixer (118) mixes the inputs of the signaling processor (104), the decoder/scaler (110), and the application controller (105) and, then, outputs the mixed inputs.

The output formatter (119) configures the output of the mixer (118) to best fit the output format of the display unit. Herein, for example, the output formatter (119) bypasses 2D contents. However, in case of 3D contents, in accordance with the control operations of the controller (115), the output formatter (119) may be operated as a 3D formatter, which processes the 3D contents to best fit its display format and the output frequency of the display unit (120).

The output formatter (119) may output 3D image data to the display unit (120), and, when viewing the outputted 3D image data by using shutter glasses (121), the output formatter (119) may generate a synchronization signal (Vsync) related to the 3D image data, which is configured to be synchronized as described above. Thereafter, the output formatter (119) may output the generated synchronization signal to an IR emitter (not shown), which is included in the shutter glasses, so as to enable the user to view the 3D image being displayed with matching display synchronization through the shutter glasses (121).

According to the embodiment of the present invention, the digital broadcast receiver may further include a scaler (not shown) configured to perform image-processing on each of left image data and right image data of the 3D image data. And, the output formatter (119) may output the image-processed left image data and right image data in a 3D format by using a predetermined depth value.

The user input unit (123) may receive a depth control command respective to the 3D image data.

At this point, the output formatter (119) outputs the image-processed left image data and right image data by using a depth value corresponding to the depth control command.

Additionally, the scaler (not shown) according to the embodiment of the present invention may respectively enlarge or reduce each of the left image data and the right image data of the 3D image data by an enlargement ratio or reduction ratio corresponding to the enlargement command or reduction command respective to the 3D image data.

At this point, the application controller (105) may display the first user interface receiving the enlargement command or the reduction command respective to the 3D image data and the second user interface receiving the depth control command respective to the display unit (120). And, the user input unit (123) may receive an enlargement command or reduction command, and a depth control command. Also, the user input unit (1506) may be designated with an enlargement or reduction area of the 3D image data.

The scaler (not shown) may also respectively enlarge or reduce the designated enlargement areas or reduction areas within the left image data and right image data of the 3D image data by the respective enlargement ratio or reduction ratio.

The output formatter (119) may output the enlarged or reduced left image data and right image data in a 3D format.

At this point, the output formatter (119) may output the enlarged or reduced left image data and right image data by using a depth value corresponding to the enlargement ratio or reduction ratio. And, in case a depth control command respective to the 3D image data is received from the user input unit (123), the output formatter (119) may output the enlarged or reduced left image data and right image data by using a depth value corresponding to the received depth control command.

Furthermore, the display device may further include a position determination module (122) configured to determine a changed user position value. And, the scaler (not shown) may decide an enlargement ratio or reduction ratio and an enlargement area or reduction area respective to the 3D image data in accordance with the determined changed user position value. Then, the scaler (not shown) may enlarge or reduce the respective areas decided to be enlarged or reduced in the left image data and the right image data of the 3D image data in accordance with the decided enlargement ratio or reduction ratio.

At this point, the position determination module (122) senses the user's position at predetermined time intervals. And, when a change occurs in the sensed user position, the position determination module (122) generates a vector value corresponding to the changed position value, and the scaler (not shown) may decide the enlargement ratio or reduction ratio and the enlargement area or reduction area with respect to the generated vector value

The IR emitter receives the synchronization signal generated by the output formatter (119) and outputs the generated synchronization signal to a light receiving unit (not shown) within the shutter glasses (121). Then, the shutter glasses (150) adjust a shutter opening cycle period in accordance with the synchronization signal, which is received by the IR emitter (not shown) after passing through the light receiving unit (not shown). Thus, synchronization of the 3D image data being outputted from the display unit (120) may be realized.

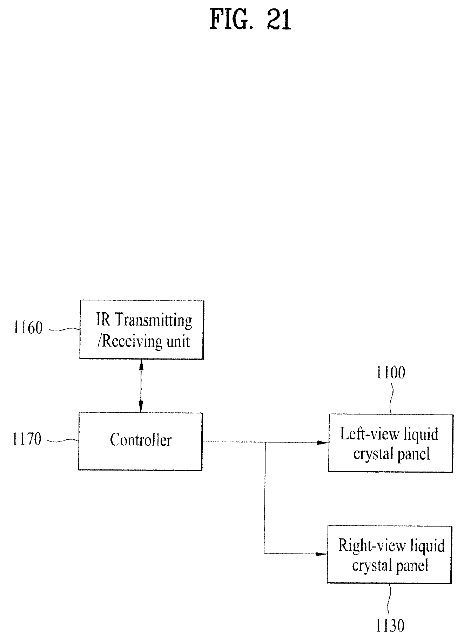

Fig. 21 illustrates an example structure of a pair of shutter glasses according to an exemplary embodiment of the present invention.

Referring to Fig. 21, the shutter glasses are provided with a left-view liquid crystal panel (1100) and a right-view liquid crystal panel (1130). Herein, the shutter liquid crystal panels (1100, 1130) perform a function of simply allowing light to pass through or blocking the light in accordance with a source drive voltage. When left image data are displayed on the display device, the left-view shutter liquid crystal panel (1100) allows light to pass through and the right-view shutter liquid crystal panel (1130) blocks the light, thereby enabling only the left image data to be delivered to the left eye of the shutter glasses user. Meanwhile, when right image data are displayed on the display device, the left-view shutter liquid crystal panel (1100) blocks the light and the right-view shutter liquid crystal panel (1130) allows light to pass through, thereby enabling only the right image data to be delivered to the right eye of the shutter glasses user.

During this process, an infrared light ray receiver (1160) of the shutter glasses converts infrared signals received from the display device to electrical signals, which are then provided to the controller (1170). The controller (1170) controls the shutter glasses so that the left-view shutter liquid crystal panel (1100) and the right-view shutter liquid crystal panel (1130) can be alternately turned on and off in accordance with a synchronization reference signal.

As described above, depending upon the control singles received from the display device, the shutter glasses may either allow light to pass through or block the light passage through the left-view shutter liquid crystal panel (1100) or the right-view shutter liquid crystal panel (1130).

As described above, the detailed description of the preferred embodiments of the present invention, which is disclosed herein, is provided to enable anyone skilled in the art to realize and perform the embodiment of the present invention. Although the description of the present invention is described with reference to the preferred embodiments of the present invention, it will be apparent that anyone skilled in the art may be capable of diversely modifying and varying the present invention without deviating from the technical scope of the claims. For example, anyone skilled in the art may use the elements disclosed in the above-described embodiments of the present invention by diversely combining each of the elements.

### Mode for Carrying Out the Present Invention

Diverse exemplary embodiments of the present invention have been described in accordance with the best mode for carrying out the present invention.

### Industrial Applicability

By enabling the user to select a depth value along with an enlargement or reduction option of 3D image data, the present invention enables the user to use the 3D image data with more convenience.

## Claims

1. A method of image-processing in a three-dimensional, 3D, display device, the method comprising:
receiving (S601) an enlargement command or reduction command to a 3D image;
deciding (S602) an enlargement ratio or reduction ratio corresponding to the received enlargement command or reduction command;
deciding (S603) an enlargement area or reduction area;
enlarging or reducing (S604) the 3D image based on the decided enlargement ratio or reduction ratio; and
outputting the enlarged or reduced 3D image,
**characterized in that** the step of outputting the enlarged or reduced 3D image comprises:
determining (S605) whether or not a depth control command on the enlarged or reduced 3D image is received,
performing 3D format output (S606) of the enlarged or reduced 3D image to be outputted based on a depth value corresponding to the received depth control command if the depth control command is received, and
determining (S607) a depth value which correspond to the decided enlargement ratio or reduction ratio, and performing 3D format output (S608) of the enlarged or reduced 3D image to be outputted based on said determined depth value, if the depth control command is not received.

2. The method of claim 1, further comprising:
outputting a first user interface receiving the enlargement command or the reduction command to the 3D image and a second user interface receiving the depth control command to the 3D image on a display screen.

3. The method of claim 1, further comprising:
receiving designation of an enlargement area or reduction area of the 3D image data, and
respectively enlarging or reducing the designated enlargement area or reduction area within the left image data and the right image data of the 3D image data.

4. The method of claim 1, further comprising:
determining a changed user position value, and
wherein the step of determining a changed user position value, and deciding an enlargement ratio or reduction ratio and an enlargement area or reduction area respective to the 3D image data in accordance with the determined changed user position value, comprises:
sensing the user's position at predetermined time intervals, generating a vector value corresponding to the changed position value, when a change occurs in the sensed user position, and deciding the enlargement ratio or reduction ratio and the enlargement area or reduction area with respect to the generated vector value.

5. A three-dimensional, 3D, display device, the 3D display device comprising:
a user input unit (1506) configured to receive an enlargement command or reduction command to a 3D image;
an application controller (1507) configured to decide an enlargement ratio or reduction ratio corresponding to the received enlargement command or reduction command and decide an enlargement area or reduction area;
a scaler configured to enlarge or reduce the 3D image based on the decided enlargement ratio or reduction ratio;
**characterized by** an output formatter configured to:
determine whether or not a depth control command is received,
perform 3D format output of the 3D image to be outputted based on a depth value corresponding to the depth control command if the depth control command is received through the user input unit (1506), and
determine a depth value which correspond to the decided enlargement ratio or reduction ratio and perform 3D format output of the 3D image to be outputted based on said determined depth value, if the depth control command is not received; and
a display unit (1509) configured to output the enlarged or reduced 3D image.

6. The 3D display device of claim 5, comprising an image-processing procedure that includes an over-scanning process.

7. The 3D display device of claim 5, wherein the application controller is configured to output a first user interface receiving the enlargement command or the reduction command respective to the 3D image data and a second user interface receiving the depth control command respective to the 3D image data on a display screen.

8. The 3D display device of claim 5, wherein the user input unit is configured to be designated with an enlargement area or reduction area of the 3D image data, and
wherein the scaler is configured to respectively enlarge or reduce the designated enlargement area or reduction area within the left image data and the right image data of the 3D image data.

## Patentansprüche

1. Verfahren zur Bildbearbeitung in einer dreidimensionalen, 3D, Anzeigevorrichtung, wobei das Verfahren aufweist:
Empfangen (S601) eines Vergrößerungsbefehls oder eines Verkleinerungsbefehls für ein 3D-Bild;
Bestimmen (S602) eines Vergrößerungsverhältnisses oder eines Verkleinerungsverhältnisses entsprechend dem empfangenen Vergrößerungsbefehl oder Verkleinerungsbefehl;
Bestimmen (S603) eines Vergrößerungsbereichs oder Verkleinerungsbereichs;
Vergrößern oder Verkleinern (S604) des 3D-Bilds basierend auf dem bestimmten Vergrößerungsverhältnis oder Verkleinerungsverhältnis; und
Ausgeben des vergrößerten oder verkleinerten 3D-Bilds,
**dadurch gekennzeichnet, dass** der Schritt zum Ausgeben des vergrößerten oder verkleinerten 3D-Bilds aufweist:
Bestimmen (S605), ob ein Tiefensteuerbefehl für das vergrößerte oder verkleinerte 3D-Bild empfangen wird oder nicht,
Durchführen der 3D-Formatausgabe (S606) für das vergrößerte oder verkleinerte 3D-Bild, das ausgegeben werden soll, basierend auf einem Tiefenwert, der dem empfangenen Tiefensteuerbefehl entspricht, wenn der Tiefensteuerbefehl empfangen wird, und
Bestimmen (S607) eines Tiefenwerts, der dem bestimmten Vergrößerungsverhältnis oder Verkleinerungsverhältnis entspucht, und Durchführen der 3D-Formatausgabe (S608) des vergrößerten oder verkleinerten 3D-Bilds, das ausgegeben werden soll, basierend auf dem bestimmten Tiefenwert, wenn der Tiefensteuerbefehl nicht empfangen wird.

2. Verfahren nach Anspruch 1, das ferner aufweist:
Ausgeben einer ersten Benutzerschnittstelle, die den Vergrößerungsbefehl oder den Verkleinerungsbefehl für das 3D-Bild empfängt, und einer zweiten Benutzerschnittstelle, die den Tiefensteuerbefehl für das 3D-Bild empfängt, auf einem Anzeigebildschirm.

3. Verfahren nach Anspruch 1, das ferner aufweist:
Empfangen einer Bestimmung eines Vergrößerungsbereichs oder Verkleinerungsbereichs der 3D-Bilddaten, und
jeweils Vergrößern oder Verkleinert des bestimmten Vergrößerungsbereichs oder Verkleinerungsbereichs innerhalb der linken Bilddaten und der rechten Bilddaten der 3D-Bilddaten.

4. Verfahren nach Anspruch 1, das ferner aufweist:
Bestimmen eines geänderten Benutzerpositionswerts, und
wobei der Schritt des Bestimmens eines geänderten Benutzerpositionswerts und des Bestimmens eines Vergrößerungsverhältnisses oder Verkleinerungsverhältnisses und eines Vergrößerungsbereichs oder Verkleinerungsbereichs bezüglich der 3D-Bilddaten gemäß dem bestimmten geänderten Benutzerpositionswert aufweist:
Abtasten der Benutzerposition in vorgegebenen Zeitabständen, Erzeugen eines Vektorwerts, der dem geänderten Positionswert entspricht, wenn eine Änderung in der abgetasteten Benutzerposition auftritt, und Bestimmen des Vergrößerungsverhältnisses oder Verkleinerungsverhältnisses und des Vergrößerungsbereichs oder Verkleinerungsbereichs in Bezug auf den erzeugten Vektorwert.

5. Eine dreidimensionale, 3D, Anzeigevorrichtung, wobei die 3D-Vorrichtung aufweist
eine Benutzereingabeeinheit (1506), die konfiguriert ist, um einen Vergrößerungsbefehl oder Verkleinerungsbefehl für ein 3D-Bild zu empfangen;
eine Anwendungssteuerung (1507), die konfiguriert ist, um ein Vergrößerungsverhältnis oder ein Verkleinerungsverhältnis entsprechend dem empfangenen Vergrößerungsbefehl oder Verkleinerungsbefehl zu bestimmen und eine Vergrößerungsfläche oder Verkleinerungsfläche zu bestimmen;
eine Skaliereinrichtung, die konfiguriert ist, um das 3D-Bild basierend auf dem bestimmten Vergrößerungsverhältnis oder Verkleinerungsverhältnis zu vergrößern oder zu verkleinern;
**gekennzeichnet durch** eine Ausgabeformatiereinrichtung, die konfiguriert ist, um:
zu bestimmen, ob ein Tiefensteuerbefehl empfangen wird oder nicht,
die 3D-Formatausgabe des 3D-Bilds, das ausgegeben werden soll, basierend auf einem Tiefenwert, der dem Tiefensteuerbefehl entspricht, wenn der Tiefensteuerbefehl durch die Benutzereingabeeinheit (1506) empfangen wird, durchzuführen, und
einen Tiefenwert zu bestimmen, der dem bestimmten Vergrößerungsverhältnis oder Verkleinerungsverhältnis entspricht, und die 3D-Formatausgabe des 3D-Bilds, das ausgegeben werden soll, basierend auf dem bestimmten Tiefenwert durchzuführen, wenn der Tiefensteuerbefehl nicht empfangen wird; und
eine Anzeigeeinheit (1509), die konfiguriert ist, um das vergrößerte oder verkleinerte 3D-Bild auszugeben.

6. 3D-Anzeigevoruchtung nach Anspruch 5, die ein Bildverarbeitungsverfahren aufweist, das einen Overscan-Prozess umfasst.

7. 3D-Anzeigevorrichtung nach Anspruch 5, wobei die Anwendungssteuerung konfiguriert ist, um eine erste Benutzerschnittstelle, die den Vergrößerungsbefehl oder den Verkleinerungsbefehl bezüglich der 3D-Bilddaten empfängt, und eine zweite Benutzerschnittstelle, die den Tiefensteuerbefehl bezüglich der 3D-Bilddaten empfängt, auf einem Anzeigebildschirm auszugeben.

8. 3D-Anzeigevorrichtung nach Anspruch 5, wobei die Benutzereingabeeinheit derart konfiguriert ist, dass sie mit einem Vergrößerungsbereich oder Verkleinerungsbereich der 3D-Bilddaten bestimmt wird, und
wobei die Skaliereinrichtung konfiguriert ist, um den bestimmten Vergrößerungsbereich oder Verkleinerungsbereich innerhalb der linken Bilddaten und der rechten Bilddaten der 3D-Bilddaten jeweils zu vergrößern oder zu verkleinern.

## Revendications

1. Procédé de traitement d'image dans un dispositif d'affichage tridimensionnel, 3D, le procédé comprenant :
la réception (S601) d'une commande d'agrandissement ou d'une commande de réduction sur une image 3D ;
la décision (S602) concernant un rapport d'agrandissement ou un rapport de réduction correspondant à la commande d'agrandissement ou la commande de réduction reçue ;
la décision (S603) concernant une superficie d'agrandissement ou une superficie de réduction ;
l'agrandissement ou la réduction (S604) de l'image 3D en fonction du rapport d'agrandissement ou du rapport de réduction décidé ; et
la production en sortie de l'image 3D agrandie ou réduite,
**caractérisé en ce que** l'étape de la production en sortie de l'image 3D agrandie ou réduite comprend :
la détermination (S605) qu'une commande de contrôle de profondeur sur l'image 3D agrandie ou réduite est reçue ou non,
la réalisation de sortie en format 3D (S606) de l'image 3D agrandie ou réduite destinée à être produite en sortie en fonction d'une valeur de profondeur correspondant à la commande de contrôle de profondeur reçue si la commande de contrôle de profondeur est reçue, et
la détermination (S607) d'une valeur de profondeur qui correspond au rapport d'agrandissement ou au rapport de réduction décidé, et l'exécution de sortie en format 3D (S608) de l'image 3D agrandie ou réduite destinée à être produite en sortie en fonction de ladite valeur de profondeur déterminée, si la commande de contrôle de profondeur n'est pas reçue.

2. Procédé selon la revendication 1, comprenant en outre :
la production en sortie d'une première interface utilisateur recevant la commande d'agrandissement ou la commande de réduction sur l'image 3D et d'une seconde interface utilisateur recevant la commande de contrôle de profondeur sur l'image 3D sur un écran d'affichage.

3. Procédé selon la revendication 1, comprenant en outre :
la réception de désignation d'une superficie d'agrandissement ou d'une superficie de réduction des données d'image 3D, et
l'agrandissement ou la réduction respective de la superficie d'agrandissement ou de la superficie de réduction désignée au sein des données d'image gauche et des données d'image droite des données d'image 3D.

4. Procédé selon la revendication 1, comprenant en outre :
la détermination d'une valeur de position d'utilisateur changée, et
dans lequel l'étape de la détermination d'une valeur de position d'utilisateur changée, et de la décision concernant un rapport d'agrandissement ou un rapport de réduction et une superficie d'agrandissement ou une superficie de réduction par rapport aux données d'image 3D conformément à la valeur de position d'utilisateur changée déterminée, comprend :
la détection de la position de l'utilisateur à des intervalles de temps prédéterminés, la génération d'une valeur vectorielle correspondant à la valeur de position changée, lorsqu'un changement se produit dans la position d'utilisateur détectée, et la décision concernant le rapport d'agrandissement ou le rapport de réduction et la superficie d'agrandissement ou la superficie de réduction par rapport à la valeur vectorielle générée.

5. Dispositif d'affichage tridimensionnel, 3D, le dispositif d'affichage 3D comprenant :
une unité d'entrée utilisateur (1506) configurée pour recevoir une commande d'agrandissement ou commande de réduction sur une image 3D ;
un contrôleur d'application (1507) configuré pour décider d'un rapport d'agrandissement ou d'un rapport de réduction correspondant à la commande d'agrandissement ou la commande de réduction reçue et décider d'une superficie d'agrandissement ou d'une superficie de réduction ;
un organe de mise à échelle configuré pour agrandir ou réduire l'image 3D en fonction du rapport d'agrandissement ou du rapport de réduction décidé ;
**caractérisé par** un formateur de sortie configuré pour :
déterminer si une commande de contrôle de profondeur est reçue ou non,
réaliser une sortie en format 3D de l'image 3D destinée à être produite en sortie en fonction d'une valeur de profondeur correspondant à la commande de contrôle de profondeur si la commande de contrôle de profondeur est reçue par l'intermédiaire de l'unité d'entrée utilisateur (1506), et
déterminer une valeur de profondeur qui correspond au rapport d'agrandissement ou au rapport de réduction décidé et effectuer une sortie en format 3D de l'image 3D destinée à être produite en sortie en fonction de ladite valeur de profondeur déterminée, si la commande de contrôle de profondeur n'est pas reçue ; et
une unité d'affichage (1509) configurée pour produire en sortie l'image 3D agrandie ou réduite.

6. Dispositif d'affichage 3D selon la revendication 5, comprenant une procédure de traitement d'image qui inclut un traitement de sur-balayage.

7. Dispositif d'affichage 3D selon la revendication 5, dans lequel le contrôleur d'application est configuré pour produire en sortie une première interface utilisateur recevant la commande d'agrandissement ou la commande de réduction par rapport aux données d'image 3D et une seconde interface utilisateur recevant la commande de contrôle de profondeur par rapport aux données d'image 3D sur un écran d'affichage.

8. Dispositif d'affichage 3D selon la revendication 5, dans lequel l'unité d'entrée utilisateur est configurée pour être désignée avec une superficie d'agrandissement ou superficie de réduction des données d'image 3D, et
dans lequel l'organe de mise à échelle est configuré pour respectivement agrandir ou réduire la superficie d'agrandissement ou la superficie de réduction désignée au sein des données d'image gauche et des données d'image droite des données d'image 3D.
